Europäisches Patentamt

European Patent Office

Office européen des brevets

(11) Publication number: **0 440 806 A1**

(12) **EUROPEAN PATENT APPLICATION**
published in accordance with Art.
158(3) EPC

(21) Application number: 90912049.5

(22) Date of filing: 10.08.90

(86) International application number:
PCT/JP90/01027

(87) International publication number:
WO 91/03008 (07.03.91 91/06)

(51) Int. Cl.⁵: **G05B 19/05**

(30) Priority: 25.08.89 JP 219831/89

(43) Date of publication of application:
14.08.91 Bulletin 91/33

(84) Designated Contracting States:
DE FR GB

(71) Applicant: **FANUC LTD.**
**3580, Shibokusa Aza-Komanba, Oshino-mura**
**Minamitsuru-gun, Yamanashi 401-05(JP)**

(72) Inventor: **TANAKA, Kunio**

5-8-13, Tamagawacho Akishima-shi
Tokyo 196(JP)
Inventor: **SAIKI, Yoshiharu Fanuc Dai-3**
**Vira-karamatsu**
**3527-1, Shibokusa Oshinomura**
**Minamitsuru-gun Yamanashi 401-05(JP)**

(74) Representative: **Brunner, Michael John et al**
**GILL JENNINGS & EVERY 53-64 Chancery**
**Lane**
**London WC2A 1HN(GB)**

(54) **SYSTEM FOR CONTROLLING PROGRAM OF PC.**

(57) A program control system for a PC (programmable controller) using a sequence program of a plurality of parallel processing programs. The system has a select function instruction (1) for selecting a program determined by the conditions in the sequence program out of the parallel processing programs (2, 3, 4). By providing the select function instruction that selects programs to be processed in parallel, it is made easy to prepare a sequence program without the need of using the jump instruction or the branch instruction. When the sequence program is compiled in an executable form, furthermore, the instructions to be processed in parallel can be easily discriminated owing to the select function instruction, and the longest program is selected out of the programs to be processed in parallel and divided to meet the practical execution time to eliminate idle time.

Fig. 1

TECHNICAL FIELD

The present invention relates to a program control system for a programmable controller of a sequence program having a plurality of parallel-processing programs, and more specifically, to a program control system for a programmable controller having a selection function command by which a program of the paralled-processing programs is selected.

BACKGROUND ART

As a capacity of a sequence program is increased, a problem rises in that a programmable controller (PC) must reduce the processing time. One means of solving this problem is to increase a speed of hardware such as a micro-processor, a memory and the like, but also the software, i.e., the structure of a program, must be considered.

Nevertheless, in the sequence program of a programmable controller, although one of a plurality of programs must be executed, it is not always necessary for all of them to be executed.

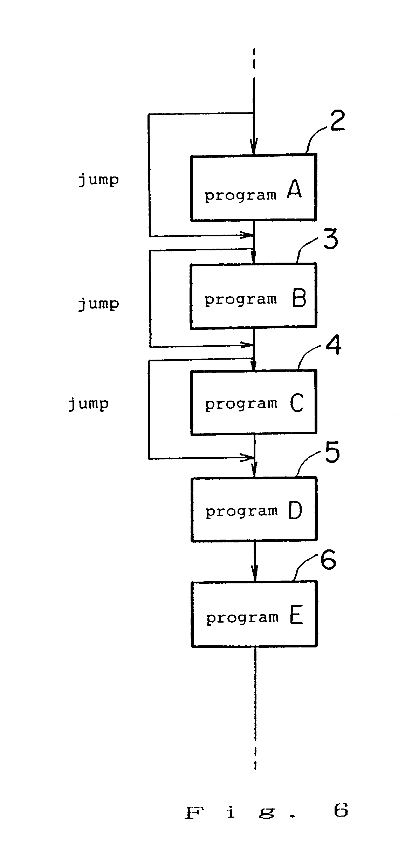

Figure 6 shows an example of the sequence program wherein one of a program A2, program B3, and program C4 can be executed by the conditions determined by the processings executed prior thereto (in this description, these programs are referred to as a parallel-processing program). A program D5 and program E6 must be executed at all times.

These subprograms, however, are generally described in series when the sequence program is created and subprograms which are not actually needed are executed, which prevents a reduction of the processing time of a programmable controller, and to eliminate this problem, the use of a jump command, divergence command, and the like is considered.

To execute a sequence program having a large capacity in a PC, however, a sequence program is executed by being divided into a plurality of execution levels. More specifically, when all of the sequence program is similarly executed, a time needed to execute the sequence program is made longer, and thus signals that should be processed at a high speed cannot be processed.

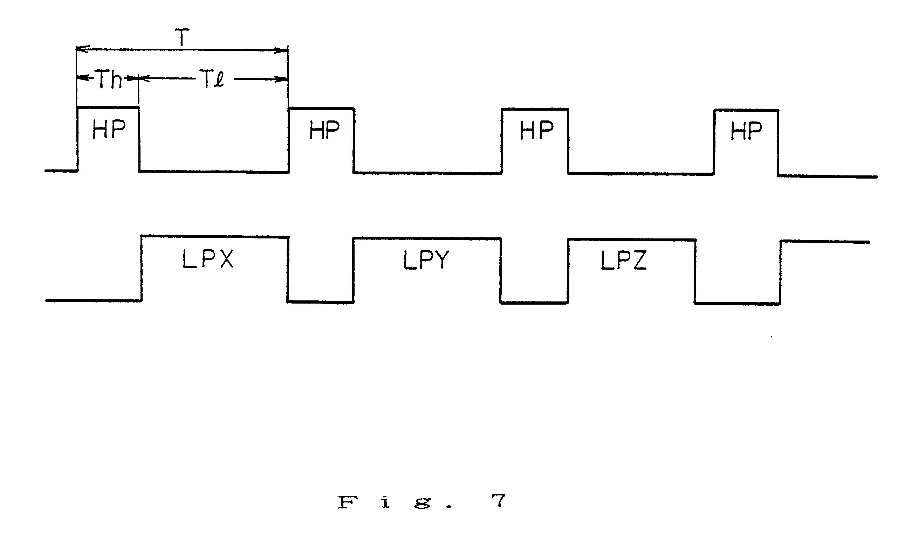

Therefore, a system is employed by which a sequence program to be executed is divided into a high speed level and low speed level. Figure 7 shows a timechart of the sequence program when executed by being divided into two levels.

In the figure, a program HP must be executed at a high speed and is executed at each processing time T; the program HP is processed in a processing time Th. A program to be executed at a low speed is divided into three programs LPX, LPY and LPZ, and these programs are executed once for each three passages of the processing time T. A time needed to once execute the low speed processing program is T$\ell$. Thus, when compiled as an executing format, the sequence program must be divisionally processed. Namely, the sequence program must be divided into the programs LPX, LPY and LPZ, shown in Figure 7.

Nevertheless, when a program to be processed in parallel is processed by using the jump command and divergence command, these jump and divergence commands must be decoded by a compiler, and therefore, a time in which the program is actually executed is T$\ell$; this processing, however, cannot be carried out by the compiler. Therefore, at present, even in a program which has three programs but only one is actually executed, the program is divided by calculating an executing time based on the assumption that these three programs are executed in series, and thus much of the actual processing time used is unnecessary.

DISCLOSURE OF THE INVENTION

Taking the above into consideration, an object of the present invention is to provide a program control system for a PC by which any waste of time is eliminated by the provision of a selection function command by which a program to be processed in parallel is selected.

To solve the above problem, according to the present invention, there is provided a program control system for a programmable controller (PC) for a sequence program having a plurality of parallel-processing programs in the PC, which comprises a function command for selecting from among the parallel-processing programs a program which is determined by the conditions in the sequence program.

The provision of the selection function command for selecting the program to be processed in parallel enables the sequence program to be easily created without using a jump command and divergence command. Further, when the sequence program is complied as an execution format, a command to be processed in parallel can be easily determined by the selection function command, and the longest program among parallel-processing programs selected and subjected to a divisional processing enables a program to be divided into a length corresponding to an actual execution time, whereby an unnecessary processing time can be eliminated.

BRIEF DESCRIPTION OF THE DRAWINGS

Figure 1 is a schematic diagram of a sequence program of a program control system for a programmable controller according to the present invention;

Figure 2 is a diagram showing a specific example of a selection function command;

Figure 3 is a diagram for explaining the division of a sequence program;

Figure 4 is a flowchart of a divisional processing of a sequence program;

Figure 5 is a block diagram of hardware of a numerical control apparatus (CNC) as a whole and embodying the present invention;

Figure 6 is a diagram showing an example of a sequence program; and

Figure 7 is a timechart used when a sequence program is executed by being divided into two levels.

BEST MODE OF CARRYING OUT THE INVENTION

An embodiment of the present invention will be described below with reference to drawings.

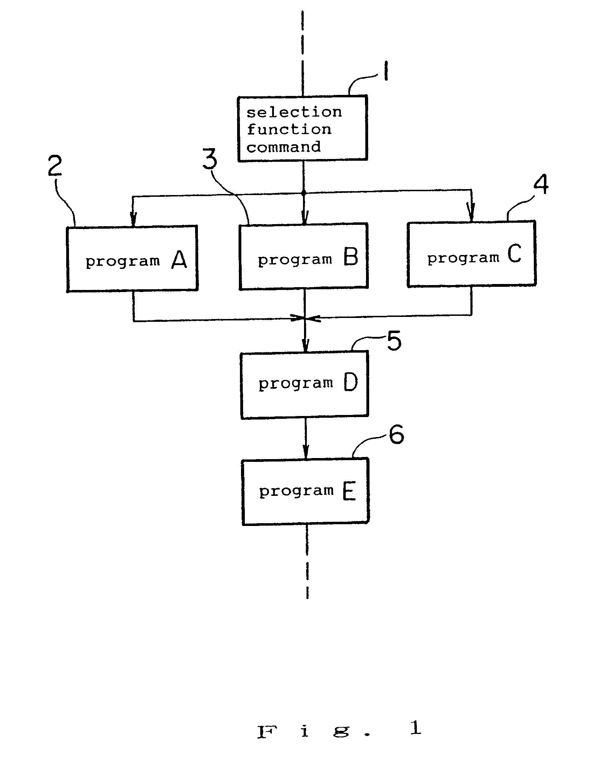

Figure 1 is a schematic diagram of a sequence program of a program control system for a programmable controller according to the present invention, wherein one of a program A2, program B3 and program C4 must be executed by the conditions determined as a result of the processings prior thereto. A selection function command 1 is provided in the present invention to select the program, and one of the three programs A2, B3 and C4 is selected by the selection function command 1 and executed. A program D5 and program E6 must be executed at all times.

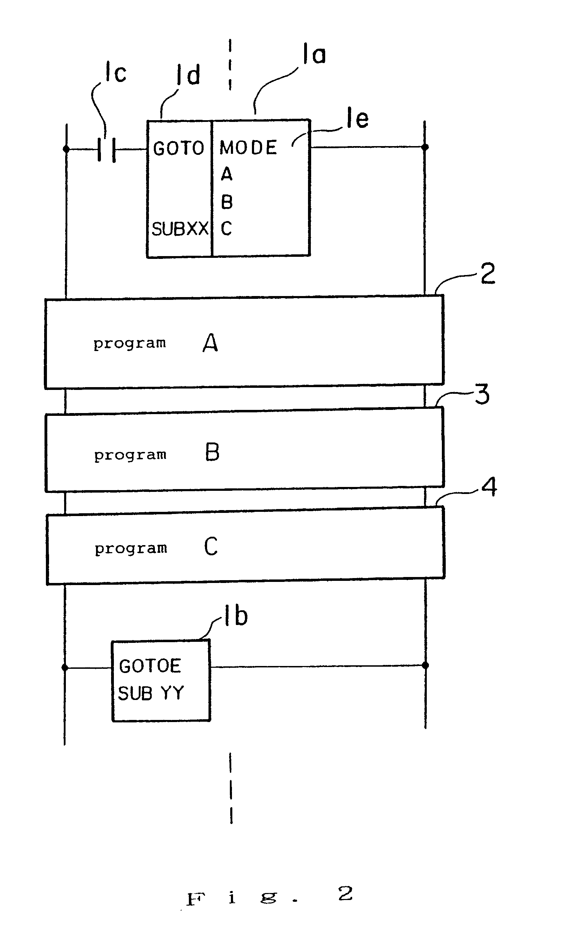

Figure 2 is a diagram showing a specific example of the selection function command. In Fig. 2 the sequence program is shown be a ladder format. The selection function command is composed of two commands, i.e., a command 1a to be placed at the beginning of a program to be selected and a command 1b to be placed at the end of the program to be selected. The command 1a is effective when a contact 1c is turned on. When the contact 1c is turned off, no program is selected and the next program is executed. A portion 1d of the command 1a denotes the selection function command. A portion 1e describes a control condition, and the program A2, program B3 or program C4 is selected and executed, respectively, depending upon whether the control condition MODE has a value of 0, 1, or 2. When there is no program corresponding to a value of the control condition MODE, the next program will be processed.

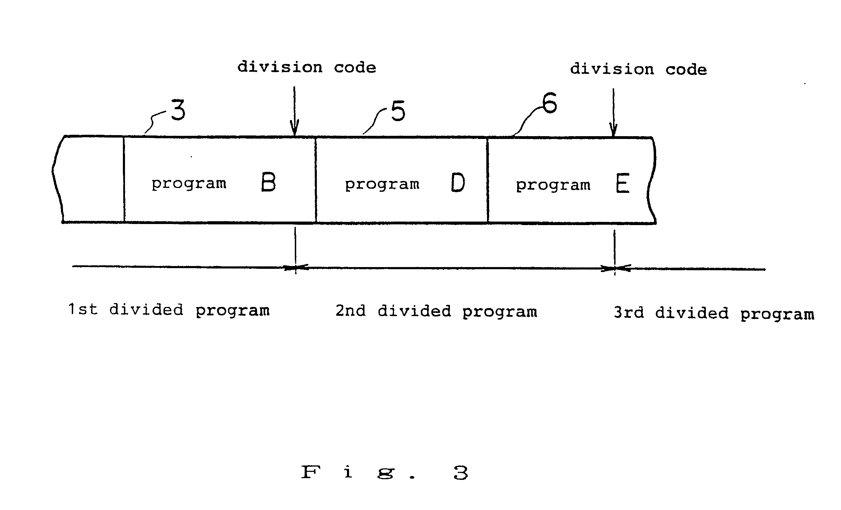

Next, a method of actually dividing this program will be described. Figure 3 is a diagram for explaining the division of the sequence program. The programs A2, B3, C4, D5, and E6 are each assumed to be a program to be processed at a low speed.

It is assumed that only one of the programs A2, B3 and C4 is actually executed and the program B3 is the longest of the three programs, and therefore, the division is carried out by selecting the longest program B3. Figure 3 shows an example in which a program to be processed at a low speed is divided into three programs.

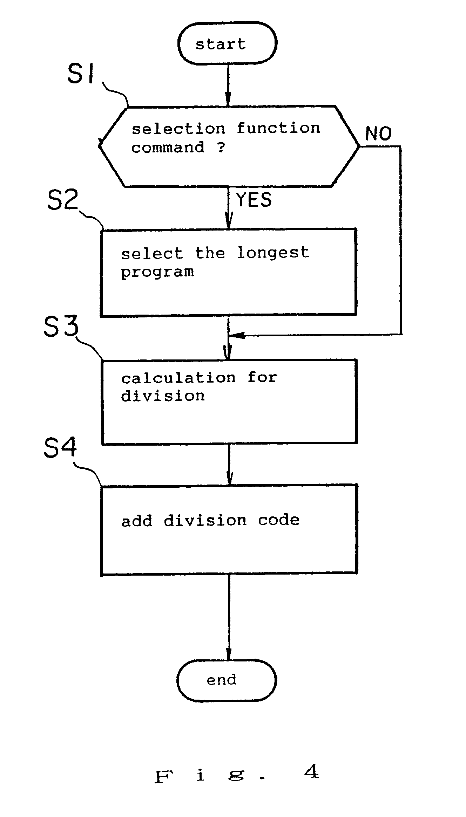

Figure 4 is a flowchart of a divisional processing of the sequence program. Here, the division is carried out when the sequence program shown by a ladder format is compiled as an execution format. This flowchart shows a portion of the divisional processing of the compiler, wherein numerals prefixed with an "S" indicate the numbers of steps of the process.

[S1] It is determined whether or not the selection function command exists, and if so, the process goes to step S2.

[S2] The longest program is selected from among a group of commands following the selection function command.

[S3] A calculation is carried out to divide a low speed processing program of the sequence program. Here, the time $T\ell$ shown in Figure 7 is one cycle time of the low speed processing program. Therefore, the division is carried out in such a manner that a processing time of respective commands is equal to the time $T\ell$.

[S4] A division code is added to the end of the divided program.

Although a case of three parallel-processing programs is described above, the number of parallel-processing programs is not limited thereto but can be arbitrarily selected. Further, although the sequence program is shown in the ladder format, it can be similarly processed in other languages.

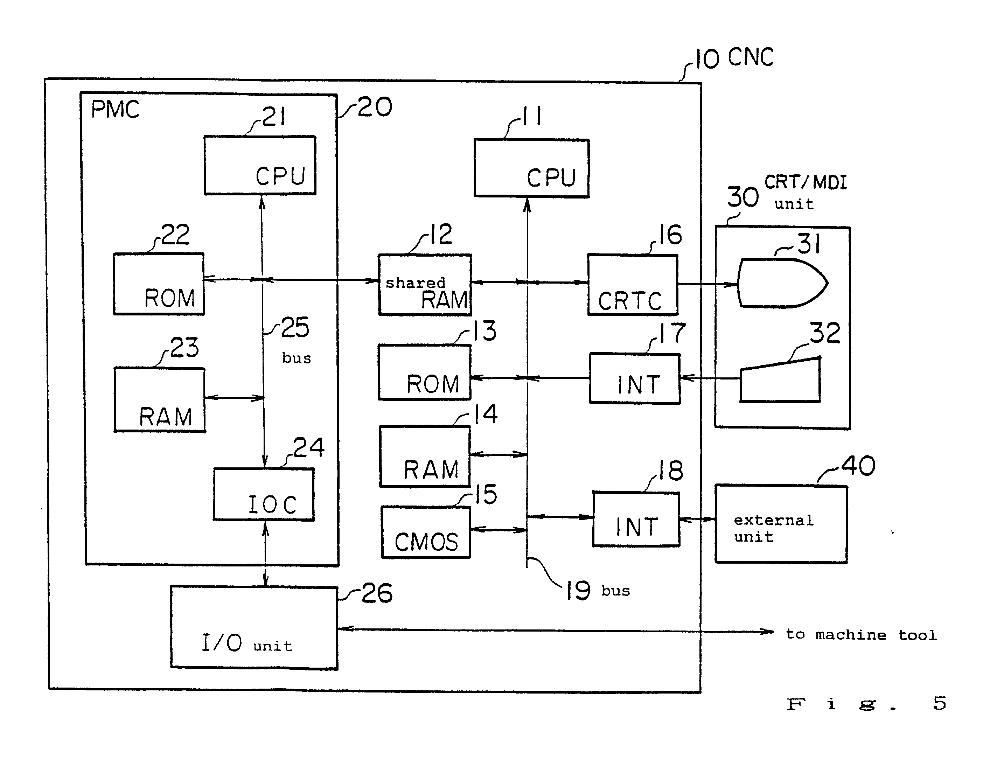

Figure 5 is a block diagram of the entire hardware of a numerical control apparatus (CNC) embodying the present invention. A programmable machine controller (PMC) 20 is incorporated in the numerical control apparatus (CNC) 10, and a processor 11, which controls the numerical control apparatus (CNC) 10 as a whole, reads a system program stored in a ROM 13 through a bus 19 and controls the numerical control apparatus (CNC) 10 according to the system program.

A shared RAM 12 enables the CNC 10 to transfer or receive data to or from the PMC 20 and stores data needed to allow a simultaneous access by both the CNC 10 and PMC 20.

A RAM 14 stores temporary calculation data, display data, and the like. A CMOS 15 is composed of a non-volatile memory which stores amounts of tool correction, amounts of pitch error correction, machining programs, parameters, and the like, and these data are maintained effective even after a power supply to the numerical control apparatus (CNC) 10 is cut off, because the CMOS 15 is supplied with power from a not shown battery and is a non-volatile memory. Further, the CMOS 15 stores parameters and the like needed by the PMC 20.

A graphic control circuit 16 converts digital data such as the present position of each axis, alarm, parameters, image data, and the like into image signals, and outputs same. The image signals are transferred to a dis play unit 31 of a CRT/MDI unit 30 to be displayed thereat. An interface 17 receives data from a keyboard 32 of the CRT/MDI unit 30 and transfers same to the processor 11.

An interface 18 for external units is connected to an external unit 40 such as a paper tape reader, paper tape puncher, paper tape reader/puncher, printer, and the like. A machine program can be read from the paper tape reader, and a machining program edited in the numerical control apparatus (CNC) 10 can be output to the paper tape puncher.

The processor 11 is connected to the elements such as the shared RAM 12, ROM 12, and the like through the bus 19.

In the figure, an axis control circuit for controlling servo motors and the like, a servo amplifier, spindle control circuit, spindle amplifier, interface for a manual pulse generator, and the like, are not shown.

The programmable machine controller (PMC) 20 is provided with a processor 21 which is connected to the shared RAM 12 through a bus 25 , and the shared RAM 12 is connected to the bus 19 of the CNC 10.

Further, a ROM 22 is connected to the bus 25, and stores a management program for controlling the PMC 20 and a sequence program. The sequence program shown in the ladder format is compiled as the program of the execution format by the compiler included in the management program. Although the sequence program is generally created by the use of a ladder language, it is sometimes created by a high-level language such as PASCAL or the like. Further, sometimes a ROM cassette interface is provided in place of the ROM 22, and a ROM cassette storing the sequence program is connected to the ROM cassette interface. With this arrangement, the sequence program can be easily upgraded and changed.

Further, a RAM 23 is connected to the bus 25 and stores an I/O signal, and the content thereof is rewritten as the sequence program is executed.

An I/O control circuit 24 is connected to the bus 25, converts an output signal stored in the RAM 23 to a serial signal, and transfers same to an I/O unit 26. Further, the I/O control circuit 24 converts a serial input signal from the I/O unit 26 to a parallel signal and transfers same to the bus 25. The signal is stored in the RAM 23 by the processor 21.

The processor 21 receives command signals such as an M function signal, T function signal and the like from the CNC 10 through the shared RAM 12. These command signals are temporarily stored in the RAM 23, processed according to the sequence program stored in the ROM 22, and then output to the I/O unit 26 through the I/O control circuit 24. These output signals control hydraulic units, pneumatic units and magnetic units of a machine tool.

Further, the processor 21 receives input signals such as a limit switch signal, a signal from an operation switch on a machine control panel, and the like, from the machine tool, and temporarily stores these signals in the RAM 23. Input signals not required to be processed by the PMC 20 are transferred to the processor 11 through the shared RAM 12. Other signals are processed by the sequence program and a part thereof output to the CNC, and the remaining signals are output as an output signal from the I/O unit 26 to the machine tool through the I/O control circuit 24.

Further, the sequence program can include commands for controlling the movement and the like of each axis, and when read by the processor 21, these commands are transferred to the processor 11 through the shared RAM 12 to control the servo motors. The spindle motors and the like may be similarly controlled by commands from the PMC.

Further, the sequence program stored in the ROM 22, and the I/O signals stored in the RAM 23, may be displayed at the display unit 31 of the CRT/MDI unit 30.

Further, the sequence program of the ROM 22 may be output to the printer connected to the interface 18, through the shared RAM 12 and bus 19.

Further, a program creation device may be connected to the interface 18, a sequence program and the like created by the program creation device may be transferred to the RAM 23, and the PMC 20 may be operated by the sequence program in the RAM 23.

As described above, according to the present invention, since a provision is made of the selection function command for selecting a program by which only one program among a plurality of programs is executed during the execution of the program, a sequence program can be easily created.

Further, when a sequence program is complied as an execution format, a command to be processed in parallel can be easily determined by the selection function command, and the longest program among the parallel-processing programs selected and subjected to a divisional processing enables a program to be divided into a length corresponding to an actual execution time, whereby unnecessary processing time can be eliminated.

**Claims**

1. A program control system for a programmable controller (PC) of a sequence program having a plurality of parallel-processing programs in said PC, comprising a function command for selecting from among said parallel-processing programs a program which is determined by the conditions in said sequence program.

2. A program control system for a PC according to claim 1, wherein said sequence program is subjected to a divisional processing by selecting a longest program from among said parallel-processing programs.

3. A program control system for a PC according to claim 1, wherein said sequence program is processed at two or more levels.

4. A program control system for a PC according to claim 1, wherein said PC is a programmable machine controller (PMC) incorporated in a numerical control apparatus (CNC).

5. A program control system for a PC according to claim 1, wherein said sequence program is shown in a ladder format.

selection
function
command

program A

program B

program C

program D

program E

F i g . 1

Fig. 2

EP 0 440 806 A1

division code

division code

3

5

6

program　B

program　D

program　E

1st divided program

2nd divided program

3rd divided program

F i g . 3

start

S1

selection function command ?

NO

YES

S2

select the longest program

S3

calculation for division

S4

add division code

end

F i g . 4

Fig. 5

F i g . 6

Fig. 7

# INTERNATIONAL SEARCH REPORT

International Application No `PCT/JP90/01027`

| **I. CLASSIFICATION OF SUBJECT MATTER** (if several classification symbols apply, indicate all) ⁶ |
|---|
| According to International Patent Classification (IPC) or to both National Classification and IPC |

Int. Cl⁵ G05B19/05

| **II. FIELDS SEARCHED** |
|---|

| Minimum Documentation Searched ⁻ | |
|---|---|
| Classification System | Classification Symbols |
| IPC | G05B19/05 |

| Documentation Searched other than Minimum Documentation to the Extent that such Documents are Included in the Fields Searched ⁸ |
|---|

| | |
|---|---|
| Jitsuyo Shinan Koho | 1932 – 1990 |
| Kokai Jitsuyo Shinan Koho | 1971 – 1990 |

| **III. DOCUMENTS CONSIDERED TO BE RELEVANT** ⁹ | | |
|---|---|---|
| Category * | Citation of Document, ¹¹ with indication, where appropriate, of the relevant passages ¹² | Relevant to Claim No. ¹³ |
| Y | JP, A, 60-214004 (Fanuc Ltd.), 26 October 1985 (26. 10. 85), & EP, A1, 180647 | 1 – 5 |
| Y | JP, A, 62-8205 (Toyo Electric Mfg. Co., Ltd.), 16 January 1987 (16. 01. 87), (Family: none) | 1 – 5 |
| Y | JP, A, 62-287302 (Fuji Electric Co., Ltd., Fuji Facom Seigyo K.K.), 14 December 1987 (14. 12. 87), (Family: none) | 1 – 5 |
| Y | JP, A, 59-226904 (Fuji Electric Co., Ltd.), 20 December 1984 (20. 12. 84), (Family: none) | 1 – 5 |
| Y | JP, A, 59-212905 (Fanuc Ltd.), 1 December 1984 (01. 12. 84), (Family: none) | 1 – 5 |

\* Special categories of cited documents ¹⁴

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

| **IV. CERTIFICATION** | |
|---|---|
| Date of the Actual Completion of the International Search | Date of Mailing of this International Search Report |
| November 5, 1990 (05. 11. 90) | November 19, 1990 (19. 11. 90) |
| International Searching Authority | Signature of Authorized Officer |
| Japanese Patent Office | |

Form PCT ISA 210 (second sheet) (January 1985)